Europäisches Patentamt

European Patent Office

Office européen des brevets

(11) Numéro de publication: **0 313 704**
**A1**

# DEMANDE DE BREVET EUROPEEN

(21) Numéro de dépôt: 87402444.1

(51) Int. Cl.⁴: **G01F 23/00**

(22) Date de dépôt: **29.10.87**

(43) Date de publication de la demande:
**03.05.89 Bulletin 89/18**

(84) Etats contractants désignés:
**BE DE ES FR GB GR IT NL SE**

(71) Demandeur: **MATERIEL ET AUXILIAIRE DE SIGNALISATION ET DE CONTROLE POUR L'AUTOMATION - AUXITROL**
**187-189 Boulevard Saint Denis**
**F-92403 Courbevoie(FR)**

(72) Inventeur: **Khoi, Danny James**
**26 rue Pasteur**
**F-92210 Saint-Cloud(FR)**

(74) Mandataire: **Martin, Jean-Jacques et al**
**Cabinet REGIMBEAU 26, Avenue Kléber**
**F-75116 Paris(FR)**

(54) **Dispositif pour la mesure du niveau d'un liquide, notamment d'un liquide inflammable.**

(57) Le dispositif selon l'invention comprend : un plongeur (2) vertical de forme allongée, librement suspendu à un filin (3) par son extrémité supérieure de manière à s'immerger partiellement dans le liquide : dans un carter (1') monté en partie supérieure du récipient, une poulie (4) mobile en rotation sur au plus un quart de tour, cette poulie permettant l'enroulement du filin de suspension du plongeur et étant solidaire d'un contrepoids (5), de sorte que la position angulaire de l'ensemble poulie-contrepoids varie en fonction de la profondeur d'immersion et par suite du niveau de liquide dans le réservoir; des moyens de mesure et de numérisation de la position angulaire de la poulie, comprenant notamment un disque codé (11) extérieur au carter (1') et un accouplement magnétique pour assurer la transmission du mouvement entre poulie (4) et disque codé (11) à travers ledit carter.

FIG.5

EP 0 313 704 A1

## DISPOSITIF POUR LA MESURE DU NIVEAU D'UN LIQUIDE, NOTAMMENT D'UN LIQUIDE INFLAMMABLE.

La présente invention concerne un dispositif pour la mesure du niveau d'un liquide, et notamment d'un liquide inflammable, dans un récipient clos.

L'invention sera principalement décrite en application à la mesure du niveau d'un liquide cryogénique, mais cette application n'est aucunement limitative et l'invention s'applique aussi bien à la mesure du niveau d'autres liquides, notamment les carburants pour véhicules automobiles contenus dans des citernes de raffineries ou de stations-service, les gaz liquéfiés, ou tout autre liquide.

On connaît de nombreux types d'appareils de mesure du niveau d'un liquide inflammable, qu'il s'agisse par exemple d'appareils basés sur la détection du déplacement d'un flotteur (appareils à indication directe, appareils à flotteur suspendu à un filin enroulé sur un tambour asservi,...) ou sur la mesure de la variation d'une propriété électrique (sondes capacitives, sondes à mesure de résistivité).

En raison du caractère inflammable du liquide dont on souhaite plus particulièrement mesurer le niveau, tous les dispositifs qui font directement ou indirectement intervenir des organes électriques doivent répondre à un certain nombre de prescriptions très rigoureuses qui obligent à concevoir ces dispositifs en sécurité intrinsèque, ou, à tout le moins, à les enfermer dans des coffrets antidéflagrants.

En ce qui concerne les dispositifs à plongeur d'Archimède, ceux-ci font en général intervenir une suspension élastique du plongeur (système de rappel à ressort ou tube de torsion), ce qui a pour conséquence de créer un effet d'hystérésis et d'introduire des défauts de précision et par surcroît les dispositifs analogiques de conversions électroniques ou pneumatiques ajoutent à l'imprécision de l'ensemble.

D'autres dispositifs connus, également à plongeur d'Archimède, comportent un plongeur relié à un système de leviers agissant sur les engrenages d'une aiguille se déplaçant sur la graduation d'un appareil indicateur,et formant balance à leviers. En particulier, le brevet français 836 857 décrit un indicateur de niveau pour cuves de brassage avec plongeur pouvant monter et descendre suivant la hauteur du liquide : cet indicateur comporte un boîtier dans lequel est logé un système articulé à cinq leviers, reliant le plongeur à un pignon attaquant un pignon plus petit,sur l'axe duquel est montée l'aiguille de l'indicateur, ledit axe étant par ailleurs relié d'un côté à un contrepoids et de l'autre côté à un dashpot de freinage.

Les indicateurs de ce type ne conviendraient pas pour la mesure du niveau d'un liquide inflammable dans des citernes (précision de mesure insuffisante en cas de variations rapides du niveau, absence de véritable sécurité intrinsèque), ou pour la mesure du niveau de fluides cryogéniques à très basse température, pour laquelle les conditions sont particulièrement sévères.

De plus, ces indicateurs, dont la conception est déjà ancienne, sont inadaptés à l'utilisation de moyens de mesure modernes n'utilisant pas une aiguille et un cadran gradué, tels par exemple que ceux utilisant des paires de disques codés, ainsi qu'illustré dans le brevet américain 4 342 996. Il est à noter que les moyens décrits dans le brevet américain précité font intervenir un grand nombre. d'organes électriques, de sorte qu'une utilisation pour la mesure du niveau de liquides inflammables exigerait de prévoir une sécurité intrinsèque très contraignante.

L'état de la technique est encore illustré par le brevet suisse 426 310 et le brevet américain 3.558 861., dans lesquels sont décrits d'autres dispositifs connus servant respectivement à déterminer le degré Ochsle d'un moût de vin (domaine de la brasserie), et à apprécier les fluctuations du niveau d'eau dans des installations de distribution et/ou de stockage.

Il convient de citer enfin les techniques de mesure à moyens électro-optiques utilisés classiquement pour équiper des balances de laboratoire, et comportant une échelle mobile présentant des endroits transparents régulièrement espacés , auxquels correspond un diaphragme mobile avec une vitesse variable (brevet belge N° 529 035).

D'une façon générale, dans le cas particulier des fluides cryogéniques à très basse température, notamment l'hydrogène liquide, les dispositifs connus n'apportent pas de résultats pleinement satisfaisants, compte tenu des conditions très particulières de température (15 degrés K, soit -258°C environ) et de pression (60 bars),et de la très faible densité (0,07) de l'hydrogène liquide.

L'un des buts de l'invention est de proposer un dispositif pour la mesure du niveau d'un liquide, notamment d'un liquide inflammable, qui :

. assure une sécurité absolue, grâce à l'absence totale de tout organe électrique à l'intérieur du réservoir aussi bien qu'à proximité de celui-ci,

. assure une très grande précision de mesure malgré une grande vitesse de variation de niveau (dans le cas de la mesure du niveau des ergols dans les réservoirs destinés à alimenter les moteurs fusées, il est impératif d'assurer une précision millimétrique sur une hauteur de l'ordre de 4 mètres),

. ne soit pas affecté par le caractère rapide ou lent de la variation du niveau,

. permette de conserver l'étanchéité complète du réservoir, grâce à la suppression de tout organe traversant la paroi de celui-ci.

En outre, on verra qu'un autre avantage essentiel de l'invention est de pouvoir délivrer directement une information numérisée représentative du niveau, cette numérisation étant effectuée in situ sans l'aide d'aucun composant ou système électrique ou électronique.

A cet effet, le dispositif selon l'invention comprend :

. un plongeur vertical de forme allongée, librement suspendu à un filin par son extrémité supérieure de manière à s'immerger partiellement dans le liquide,

. dans un carter monté en partie supérieure du récipient, une poulie mobile en rotation sur au plus un quart de tour, cette poulie permettant l'enroulement du filin de suspension du plongeur et étant solidaire d'un contrepoids, de sorte que l'ensemble poulie-contrepoids permette de compenser le poids du plongeur diminué de la poussée d'Archimède exercée par le liquide sur le plongeur, la position angulaire de l'ensemble poulie-contrepoids variant en fonction de la profondeur d'immersion et par suite du niveau de liquide dans le réservoir,

. des moyens de mesure et de numérisation de la position angulaire de la poulie, lesdits moyens comprenant un disque codé monté à l'extérieur du carter dans lequel est logé l'ensemble poulie-contrepoids, et un accouplement magnétique pour assurer la transmission du mouvement entre poulie et disque codé à travers ledit carter.

De préférence, le disque codé est un disque à codage binaire, les moyens de mesure et de numérisation comprenant des moyens optiques émetteurs et récepteurs d'un signal lumineux, entre lesquels se déplace ledit disque.

Dans ce cas, les moyens optiques émetteurs et récepteurs comportent de préférence un faisceau de fibres optiques débouchant à proximité des régions codées du disque : ceci permet la transmission à distance de l'information numérique par voie optique, donc sans qu'il soit nécessaire de prévoir un système de transmission électrique en sécurité intrinsèque.

Il est également avantageux de prévoir que l'intervalle séparant les secteurs successifs constituant le codage binaire du disque va décroissant en fonction de l'angle de rotation, la loi de variation de cet intervalle étant choisie de manière à compenser la non-linéarité introduite par l'inclinaison du contrepoids dans son déplacecement, de sorte que l'information numérisée en sortie des moyens récepteurs varie linéairement avec le niveau du liquide dans le réservoir.

Selon une autre caractéristique avantageuse, le carter dans lequel est logé l'ensemble poulie-contrepoids comporte une douille amovible en forme de gobelet cylindrique, assurant une fermeture étanche dudit carter, l'accouplement magnétique assurant la transmission du mouvement à travers la paroi latérale de ladite douille. Plus particulièrement, la transmission du mouvement à l'extérieur du carter est assurée sans jeu, par une roue dentée solidaire de l'organe mené de l'accouplement magnétique, sur laquelle engrène une roue de plus petit diamètre et coaxiale au disque codé; il sera alors intéressant de prévoir un dispositif de mesure dans lequel l'organe mené de l'accouplement magnétique est monté sur un axe solidaire de la douille cylindrique et saillant du fond de celle-ci, et dans lequel est prévu un ressort spiral de suppression de jeu tendant à appliquer la roue coaxiale au disque codé contre sa roue dentée d'entraînement.

D'autres caractéristiques et avantages de l'invention apparaîtront plus clairement à la lecture de la description détaillée qui va suivre et des dessins annexés, concernant un mode de réalisation préférentiel, en référence aux figures sur lesquelles :

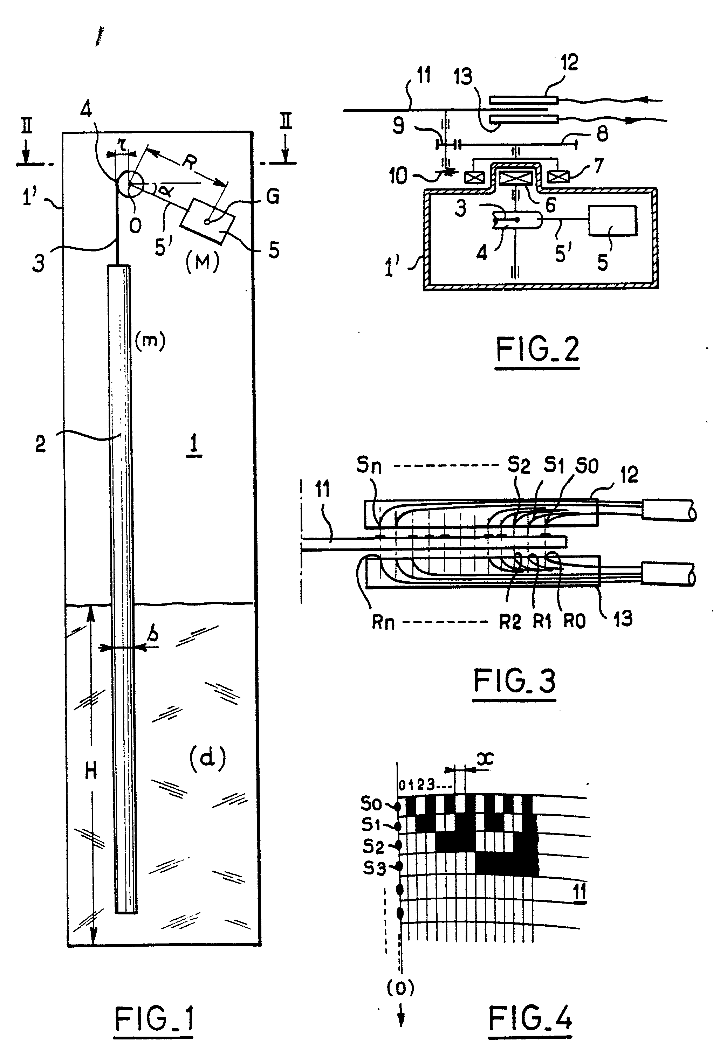

. la figure 1 montre très schématiquement les éléments essentiels du dispositif de l'invention situés ici à l'intérieur d'un récipient unique,

. la figure 2 est une vue de dessus, en coupe selon la ligne II-II de la figure 1, montrant les moyens de mesure et de numérisation de position angulaire,

. la figure 3 est un détail de la figure 2, montrant la structure et la disposition des moyens optiques émetteurs et récepteurs,

. la figure 4 est une vue en plan du disque à codage binaire montrant la répartition des secteurs successifs constituant le codage binaire.

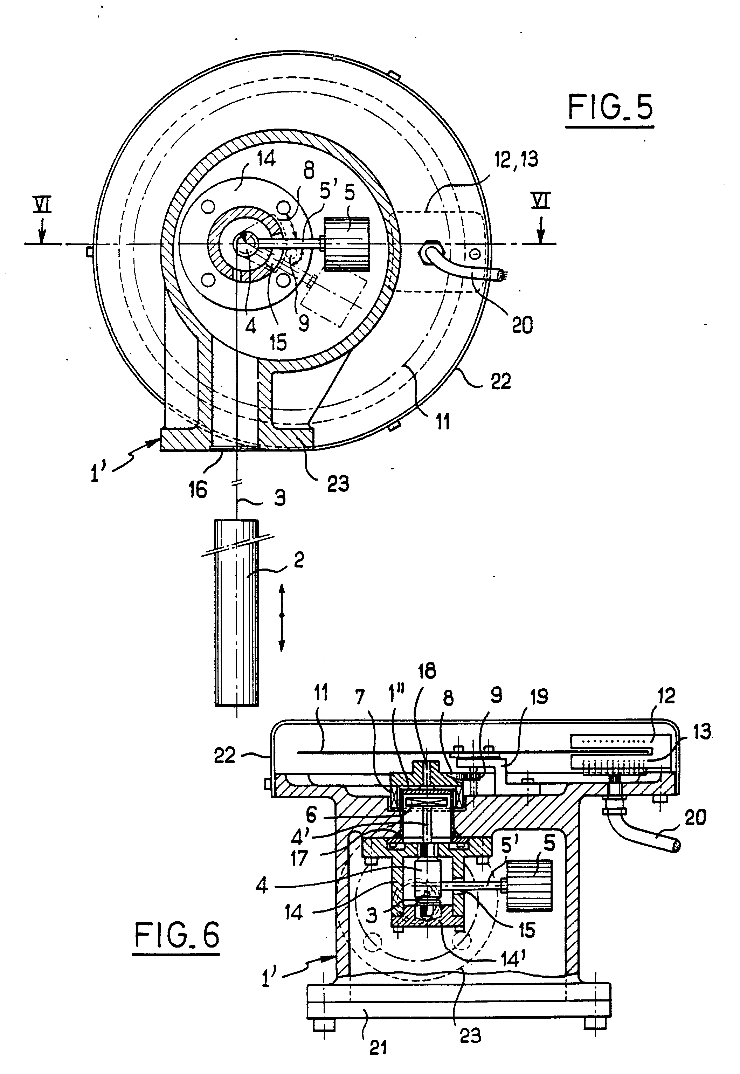

. la figure 5 illustre, en coupe selon un plan vertical passant par le filin d'accrochage du plongeur, un mode de réalisation effectif du dispositif de l'invention, conforme aux représentations des figures précédentes, montrant en particulier les détails structurels permettant de préserver l'étanchéité et l'absence de jeu dans la transmission,

. la figure 6 est une coupe selon VI-VI de la figure 5.

Sur la figure 1, la référence 1 désigne le réservoir, clos, contenant un liquide inflammable dont on souhaite mesurer le niveau. A cet effet, il est prévu un plongeur 2 de forme allongée, partiellement immergé dans le liquide. Ce plongeur peut être par exemple cylindrique et constitué en acier inoxydable, en PTFE, ou tout autre matériau approprié, et éventuellement lesté en fonction des caractéristiques physiques du liquide.

Ce plongeur 2 est librement suspendu à un filin 3, par exemple réalisé en "invar",qui est un matériau cryogénique. Ce filin s'enroule autour d'une poulie 4 de faible rayon , solidaire d'un contrepoids 5, l'ensemble poulie-contrepoids pouvant tourner d'au plus un quart de tour, l'amplitude maximale du déplacement angulaire étant de préférence de l'ordre de 1 8e de tour.

Le fonctionnement de l'ensemble schématisé ici est le suivant : on suppose que, lorsque le réservoir est vide, le contrepoids 5 équilibre exactement le poids de l'ensemble filin-plongeur de sorte que le segment OG (O correspondant à l'axe de la poulie, et G étant le centre de gravité du contrepoids) soit horizontal.

Lorsque le niveau de liquide monte dans le réservoir, la poussée d'Archimède exercée sur le plongeur vient en diminution du poids de celui-ci, de sorte que le poids apparent du plongeur va diminuer au fur et à mesure que le niveau augmente. Corrélativement, l'axe OG du contrepoids va s'incliner par rapport à l'horizontale, le filin 3 venant à s'enrouler sur la poulie 4.

L'écriture de la condition d'équilibre statique permet de déterminer la hauteur H du liquide dans le réservoir, soit :

$$H = \frac{1}{\rho s}\ (m - M\ \frac{R}{r}\ \cos\alpha) + r\,\alpha \qquad (1)$$

H    étant la hauteur du liquide dans le réservoir,
$\rho$    la masse volumique du liquide,
s    la section du plongeur,
m    la masse du plongeur,
M    la masse du contrepoids,
R    la distance séparant le centre de gravité G du contrepoids de l'axe de la poulie,
r    le rayon de la poulie, et
$\alpha$    l'angle que forme le segment OG par rapport à l'horizontale(c'est-à-dire l'inclinaison du contrepoids).

Si l'on suppose que, pour H = 0 (réservoir vide), $\alpha$ = 0, c'est-à-dire que le contrepoids est strictement horizontal pour un réservoir vide, la masse du contrepoids doit être choisie telle que :
$$M\ \frac{R}{r} = m \qquad (2)$$

De sorte que l'équation (1) devient :
$$H = \frac{m}{\rho s}\ (1 - \cos\alpha) + r\,\alpha \qquad (3)$$

On voit ainsi que, connaissent $\alpha$, on peut en déduire immédiatement la hauteur H du liquide dans le réservoir.

La mesure de l'angle de rotation $\alpha$ de la poulie est effectuée au moyen du dispositif illustré figures 2 et 3 : l'axe de la poulie 4 est solidaire d'un accouplement magnétique 6, 7 qui permet la transmission. sans jeu et tout en préservant l'étanchéité, du mouvement de la poulie à une roue dentée 8. Cette route dentée 8 entraîne à son tour une roue 9 de plus petit diamètre, de manière à démultiplier le mouvement de la poulie (par exemple dans un rapport de 1 à 10). Pour éviter tout jeu dans la transmission, il est prévu un ressort spiral 10 de suppression de jeu, tendant à appliquer la roue 9 contre la roue d'entraînement associée 8.

La roue 9 est solidaire d'un disque codé 11, en particulier un disque à codage binaire, se déplaçant entre des moyens optiques émetteurs 12 et des moyens récepteurs 13.

Ces derniers moyens sont illustrés plus en détail figure 3 : les moyens émetteurs 12 comprennent, dans un boîtier, une pluralité de fibres optiques issues d'un même faisceau et débouchant à proximité de la surface du disque en des points S0, S1, ...., de manière à former une pluralité de sources émettrices individuelles. On choisit par exemple un disque codé à douze pistes concentriques, ce qui permet une résolution de $2^{12}$ points, soit 4096 points.

De la même façon, les moyens récepteurs 13 comportent un faisceau de fibres optiques dont les extrémités R0, R1, .....débouchent, de l'autre côté du disque, en vis-à-vis des sources respectives S0, S1, ....

La figure 4 montre, en plan et à échelle agrandie, la structure d'un disque à codage binaire 11 : celui-ci est un disque transparent comportant une série de zones opaques réparties sur une série de pistes (douze dans l'exemple choisi) en forme de couronnes concentriques, et disposées au droit des sources respectives S0, S1, ..... De façon classique, le disque est divisé en une pluralité de secteurs (4096 dans l'exemple choisi) dont le code binaire (qui peut être un code binaire pur, mais aussi un code BCD, c'est-à-dire "Décimal Code Binaire" ou "Binary coded decimal" dans les pays anglo-saxons, ou tout autre code binaire approprié) est donné par la présence ou l'absence des zones opaques sur les différentes pistes d'un même secteur.

Le codage sur douze pistes, qui assure une résolution de 4096 points, permet donc d'obtenir, comme indiqué plus haut, une précision millimétrique sur une hauteur de quatre mètres environ, ce qui est particulièrement intéressant lorsqu'il s'agit de mesurer le niveau d'un carburant dans les grandes citernes de raffineries, dont le diamètre peut atteindre quatrevingt mètres.

Selon une caractéristique avantageuse de l'invention, l'intervalle X séparant les secteurs successifs n'est pas choisi constant, mais décroissant en fonction de l'angle de rotation, de manière à compenser la non-linéarité introduite par le terme en cos $\alpha$ de l'équation (3) cette non-linéarité étant surtout sensible pour les valeurs importantes de $\alpha$.

De la sorte, l'information numérisée recueillie en sortie des moyens récepteurs 13 variera linéairement avec le niveau du liquide dans le réservoir, permettant ainsi une utilisation immédiate sans aucune correction intermédiaire.

Les figures 5 et 6 illustrent un mode de réalisation effectif de l'invention, conforme aux représentations schématiques des figures 1 et 2 précédemment décrites, afin de montrer les détails structurels qui permettent notamment l'obtention d'une très grande précision de mesure, tout en préservant l'étanchéité et en évitant la présence de jeu dans la transmission.

On distingue tout d'abord un carter 1', dans lequel est logé l'ensemble poulie-contrepoids, ledit carter pouvant être monté sur le réservoir de liquide (non représenté) par une bride inférieure 23. L'espace intérieur à ce carter est aussi étanche que possible : en partie inférieure (fig.5), est simplement prévue une plaquette 16, percée d'un trou pour le passage du filin 3, tandis qu'en face avant et arrière (figure 6), est prévu un disque 21 d'un côté, et une douille amovible 1" en forme de gobelet cylindrique de l'autre côté. A l'intérieur du carter, on a ici prévu une autre douille cylindrique 14, boulonnée sur le carter 1' d'un côté et fermée par une plaquette 14' de l'autre côté, à l'intérieur de laquelle est disposée la poulie 4, dont l'appui est de préférence réalisé sous forme de couteaux. Un bras 5', solidaire de la poulie 4 et terminé par le contrepoids 5, peut se déplacer dans une lumière 15, dont l'angle au sommet est de l'ordre de 50°.

La transmission du mouvement entre la poulie 4 et le disque codé 11 est conforme à la représentation schématique de la figure 2, mais on en distingue mieux les détails sur la figure 6.

Un axe 4', solidaire de la poulie 4 et coaxial à celle-ci, porte l'organe menant 6 de l'accouplement magnétique 6, 7, ledit organe étant logé à l'intérieur de la douille amovible1", au voisinage du fond de celle-ci. De l'autre côté de cette, douille amovible 1", on distingue l'organe mené 7 de l'accouplement magnétique, de préférence monté tournant sur un axe 18 porté par ladite douille amovible : la transmission du mouvement est ainsi assurée à travers la paroi latérale de la douille, sans nuire à l'étanchéité du système, laquelle n'est simplement assurée par un joint d'étanchéité 17.

La transmission du mouvement à l'extérieur du carter 1',1" est assurée sans jeu par la roue dentée 8 solidaire de l'organe mené 7, sur laquelle engrène la roue 9 solidaire du disque codé 11 et coaxiale à celui-ci. De préférence, la roue 8 se limite à un secteur denté et est solidaire de l'organe mené 7, comme indiqué sur les figures 5 et 6.

Le bon positionnement du disque codé 11 est assuré par un cavalier 19 fixé sur le carter 1', de façon que ledit disque se déplace librement entre les moyens 12, 13, dont les fibres optiques sont ici rassemblées en un cordon unique 20. L'ensemble est enfin protégé par un capot 22, avantageusement en matière transparente.

Il va de soi que l'invention n'est pas limitée aux modes de réalisation qui viennent d'être décrits, mais englobe au contraire toute variante reprenant, avec des moyens équivalents, les caractéristiques figurant aux revendications.

## Revendications

1. Un dispositif pour la mesure du niveau d'un liquide inflammable, notamment un liquide cryogénique, dans un récipient clos (1), caractérisé en ce qu'il comprend :

. un plongeur (2) vertical de forme allongée, librement suspendu à un filin (3) par son extrémité supérieure de manière à s'immerger partiellement dans le liquide,

. dans un carter (1') monté en partie supérieure du récipient, une poulie(4) mobile en rotation sur au plus un quart de tour, cette poulie permettant l'enroulement du filin de suspension du plongeur et étant solidaire d'un contrepoids (5), de sorte que l'ensemble poulie-contrepoids permette de compenser le poids du plongeur diminué de la poussée d'Archimède exercée par le liquide sur le plongeur, la position angulaire ($\alpha$) de l'ensemble poulie-contrepoids variant en fonction de la profondeur d'immersion et par suite du niveau (H) de liquide dans le réservoir,

. des moyens (6-12) de mesure et de numérisation de la position angulaire de la poulie, lesdits moyens comprenant un disque codé (11) monté à l'extérieur du carter (1') dans lequel est logé l'ensemble poulie-contrepoids, et un accouplement magnétique (6, 7) pour assurer la transmission du mouvement entre poulie (4) et disque codé (11) à travers ledit carter.

2. Un dispositif selon la revendication 1, dans lequel le disque codé (11) est un disque à codage binaire, les moyens de mesure et de numérisation comprenant des moyens optiques émetteurs (12) et récepteurs (13) d'un signal lumineux, entre lesquels se déplace ledit disque.

3. Un dispositif selon la revendication 2, dans lequel les moyens optiques émetteurs (12) et récepteurs(13) comportent un faisceau de fibres optiques débouchant à proximité des régions codées du disque (11).

4. Un dispositif selon la revendication 2, dans lequel l'intervalle (x) séparant les secteurs successifs constituant le codage binaire du disque(11)va décroissant en fonction de l'angle de rotation, la loi de variation de cet intervalle étant choisie de manière à compenser la non-linéarité introduite par l'inclinaison du contrepoids (5) dans son déplacement, de sorte que l'information numérisée en sortie des moyens récepteurs (13) varie linéairement avec le niveau (H) du liquide dans le réservoir.

5. Un dispositif selon la revendication 1, dans lequel le carter (1') à l'intérieur duquel est logé l'ensemble poulie-contrepoids, comporte une douille amovible (1") en forme de gobelet cylindrique, assurant une fermeture étanche dudit carter, l'accouplement magnétique (6, 7) assurant la transmission du mouvement à travers la paroi latérale de ladite douille.

6. Un dispositif selon la revendication 5, dans lequel la transmission du mouvement à l'extérieur du carter (1', 1") est assurée, sans jeu, par une roue dentée (8) solidaire de l'organe mené (7) de l'accouplement magnétique, sur laquelle engrène une roue (9) de plus petit diamètre et coaxiale au disque codé (11).

7. Un dispositif selon la revendication 6, dans lequel l'organe mené (7) de l'accouplement magnétique est monté sur un axe (18) solidaire de la douille cylindrique, et saillant du fond de celle-ci, et dans lequel est prévu un ressort spiral (10) de suppression de jeu tendant à appliquer la roue (9) coaxiale au disque codé (11) contre sa roue dentée d'entraînement (8).

FIG_1

FIG_2

FIG_3

FIG_4

FIG_5

FIG_6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A- 439 191 (JOHN TRAILL WHITEHURST) <br> * Page 3, ligne 10 - page 4, ligne 39; figures * | 1,2 | G 01 F 23/00 |
| A | | 4 | |
| Y | FR-A-2 188 148 (KROHNE) <br> * En entier * | 1,2 | |
| A | | 3,5 | |
| E | FR-A-2 598 220 (AUXITROL) <br> * En entier * | 1-7 | |
| A | US-A-4 646 085 (MATHIS) <br> * Colonne 2, lignes 31-65; figure 1 * | 1,6 | |

|  |  |  | DOMAINES TECHNIQUES RECHERCHES (Int. Cl.4) |
|---|---|---|---|
|  |  |  | G 01 F <br> G 01 G |

Le présent rapport a été établi pour toutes les revendications

| Lieu de la recherche | Date d'achèvement de la recherche | Examinateur |
|---|---|---|
| LA HAYE | 06-07-1988 | ROSE A.R.P. |